(19) **Europäisches Patentamt**
**European Patent Office**
**Office européen des brevets**

(11) Veröffentlichungsnummer : **0 214 120 B1**

# (12) EUROPÄISCHE PATENTSCHRIFT

(45) Veröffentlichungstag der Patentschrift :
**05.06.91 Patentblatt 91/23**

(51) Int. Cl.⁵ : **G01B 11/24**, G01B 11/30, B23K 9/12

(21) Anmeldenummer : **86890241.2**

(22) Anmeldetag : **27.08.86**

(54) Verfahren zum Erfassen der Position und Geometrie von Werkstückoberflächen.

(30) Priorität : **28.08.85 AT 2519/85**

(43) Veröffentlichungstag der Anmeldung :
**11.03.87 Patentblatt 87/11**

(45) Bekanntmachung des Hinweises auf die
Patenterteilung :
**05.06.91 Patentblatt 91/23**

(84) Benannte Vertragsstaaten :
**AT BE CH DE FR GB IT LI LU NL SE**

(56) Entgegenhaltungen :
**EP-A- 0 108 599**
**EP-A- 0 116 798**
**EP-A- 0 134 597**
**DE-B- 2 356 491**
**GB-A- 2 157 851**
**US-A- 3 894 802**
**US-A- 3 918 816**

(56) Entgegenhaltungen :
FOTOHEFT, Heft 8, Seiten 52-56, 5. August
1985; H. GOTTFRIED: "Autofokus aktuell:
**Schritte zur Schärfe"**
PATENT ABSTRACTS OF JAPAN, Band 8, Nr.
28 (M-274) (1465), 7. Februar 1984; & JP-
A-58187265
PATENT ABSTRACTS OF JAPAN, Band 9, Nr.
79 (P-347) (1802), 9. April 1985; & JP-
A-59210309
PATENT ABSTRACTS OF JAPAN, Band 10, No.
207 (M-500) (2263), 19. Juli 1986; & JP-
A-6149774

(73) Patentinhaber : **IGM Industriegeräte- und**
**Maschinenfabriksgesellschaft mbH**
**Industriezentrum NÖ-Süd Strasse 2a, Halle M8**
**A-2351 Wiener Neudorf Niederösterreich (AT)**

(72) Erfinder : **Vokurka, Franz**
**Minorgasse 60**
**A-1140 Wien (AT)**

(74) Vertreter : **Beer, Manfred, Dipl.-Ing. et al**
**Patentanwälte Dipl.-Ing. Otto Beer, Dipl.-Ing.**
**Manfred Beer Lindengasse 8, Postfach 264**
**A-1071 Wien (AT)**

EP 0 214 120 B1

## Beschreibung

Die Erfindung betrifft ein Verfahren zum Erfassen der Position und Geometrie von Werkstückoberflächen, insbesondere von Nahtfugen beim automatischen Lichtbogenschweißen.

Beim Einsatz von automatischen Lichtbogenschweißmaschinen ergibt sich die Problematik, daß diese Schweißmaschinen zwar sehr genau in vorgegebenen Bahnen verfahren können, die zu verschweißenden Werkstücke jedoch in den meisten Fällen nicht mit der notwendigen Genauigkeit gefertigt werden. Dies ist in vielen Fällen nicht wirtschaftlich und im Hinblick auf die notwendige Genauigkeit des Endproduktes nicht erforderlich. Der wirtschaftliche Einsatz einer automatischen Schweißmaschine erfordert daher in solchen Fällen eine Einrichtung zum Erfassen der tatsächlichen Lage und oft auch der Geometrie der Schweißnaht, mit deren Hilfe die programmierten Bahndaten und Schweißparameter entsprechend korrigiert werden können.

Ansätze zur Lösung dieses Problems sind bereits bekannt. Lösungen auf optischer Basis beruhen durchwegs darauf, daß ein scharf gebündelter Lichtstrahl (praktisch kommen nur LASER zur Anwendung) unter einem bestimmten Winkel zur Achse der erfassenden Optik auf das Werkstück gerichtet wird, und die Verschiebung des Auftreffpunktes aus der neutralen Lage innerhalb der Bildebene ein Maß für die Entfernung des getroffenen Werkstückpunktes zum Sensorsystem bildet. Trotz Verwendung hervorragender Lichtquellen (LASER) und geeigneter optischer Filter haftet diesen Verfahren der Mangel an, daß die Empfangssysteme durch unsaubere Werkstückoberflächen und Strukturen des Werkstückes, die Streuungen und Spiegelungen des Sensorstrahls und des Lichtes des Lichtbogens verursachen, die Messung in so hohem Maß stören, daß nur durch Plausibilitätskontrollen und Prädiktion, die nicht immer richtig verlaufen müssen, die Funktion aufrecht erhalten werden kann.

Aus der EP-AI-0 134 597 (N.V. Optische Industrie, Delft) ist ein solches Verfahren zur Messung mit Hilfe eines gebündelten Lichtstrahles bekannt, bei dem Störeinflüsse durch Reflexionen der Werkstückoberfläche außerhalb des Meßbereiches durch eine bestimmte Anordnung des Strahles (und der Strahlablenkeinrichtung) zu einem linearen Bildaufnehmer und durch Beschränkung der strahlungsempfindlichen Fläche des Bildaufnehmers auf eine zum Werkstück senkrechte Linie vermieden werden können. Doch verursachen auch bei diesem Prinzip Reflexionen von dem im Meßbereich liegenden Ausschnitt der Werkstückoberfläche Fehler, so daß zur Unterscheidung zwischen falschen und richtigen Signalen zusätzliche Maßnahmen vorgesehen werden müssen (z.B. zwei Aufnahmeoptiken, die den beleuchteten Punkt der Werkstückoberfläche auf zwei oder einen gemeinsamen Bildaufnehmer projizieren, bestimmte Wellenlänge oder bestimmte Form des Meßstrahles usw.).

Bei allen diesen bekannten Systemen wird ein gebündelter Lichtstrahl (vorzugsweise Laser) von der Meßeinrichtung auf die Werkstückoberfläche gerichtet und aus dessen Reflexion auf einen Bildaufnehmer der Abstand dieses Punktes der Werkstückoberfläche von der Meßeinrichtung ermittelt. Nur durch gezielte Ablenkung des Strahles und die Auswertung der Meßergebnisse kann die geometrische Struktur des gesamten Werkstückausschnittes im Meßbereich des Systems errechnet werden. Die Herstellung solcher Systeme erfordert eine hochgenaue Fertigung der mechanischen und der optischen Komponenten sowie die Verwendung teurer ud voluminöser Bauteile (Laserlichtquellen, optische Filter). Die mechanischen Abmessungen und die Preise für die am Markt befindlichen Geräte erlauben deren Einsatz daher auch nur in wenigen besonderen Anwendungsfällen.

Für Spiegelreflexkameras sind auch schon elektronische Schnittbild-Entfernungsmesser, die bei Autofokus-Kameras verwendet werden, vorgeschlagen worden (vgl. FOTOHEFT 8/85, Seite 52 ff. "Autofokus aktuell"). Bei einem in diesem Aufsatz beschriebenen elektronischen Schnittbild-Entfernungsmesser bilden Zwillingslinsen zwei Teilbilder des im Sucher markierten Autofokus-Meßfeldes auf einem Halbleiter-Bildwandler ab. Je nach Schärfelage ist der Abstand zwischen beiden Teilbildern verschieden groß. Ob er richtig ist und damit das Bild scharf, erkennt der Autofokus-Computer durch den Vergleich eines einprogrammierten Signals mit dem Signal vom Bildhalbleiter. Stimmen beide nicht überein, errechnet der Computer innerhalb von wenigen tausendstel Sekunden den erforderlichen Fokussierweg für die richtige Scharfeinstellung und steuert mit Digitalimpulsen einen Einstellmotor. Bei diesem und den anderen bekannten Autofokus-Systemen geht es nicht darum, die Position und Geometrie einer Werkstückoberfläche zu erfassen, sondern das Objektiv der Kamera scharf einzustellen.

Der Erfindung liegt die Aufgabe zu Grunde, ein Verfahren der eingangs genannten Gattung anzugeben, das unabhängig von der tatsächlichen Struktur des im Meßbereich befindlichen Ausschnittes der Werkstückoberfläche zutreffende Daten über dessen gesamte Geometrie und Position als Ergebnis einer einzigen Messung liefert, wobei gefordert wird, daß der mechanische Teil der Meßeinrichtung mit kleinen Abmessungen und in robuster Bauweise ohne bewegliche Einzelteile einfach hergestellt und nahe an einem Schweißlichtbogen positioniert werden kann.

Erfindungsgemäß wird dies dadurch erreicht, daß man den zu vermessenden Ausschnitt einer Werkstückoberfläche aus zwei verschiedenen Betrachtungsstellen auf zwei Bildaufnehmern abbildet, so daß auf den beiden Bildaufnehmern gegeneinander verschobene Bilder des gleichen Ausschnittes der Werkstückoberfläche abgebildet werden und daß man aus der Position und aus dem Abstand der markanten Stellen der beiden Bilder der Werkstückoberfläche die Geometrie der Werkstückoberfläche sowie deren Position zum Betrachtungssystem ermittelt.

Beim erfindungsgemäßen Verfahren bilden unsaubere Oberflächen und Strukturen des Werkstückes keine Störursachen, sondern unterstützen sogar die Funktion des Systems. Da die Werkstücke in der Umgebung der Schweißfuge bearbeitet sind, ist ihre Existenz gesichert.

Weiters ist keine spezielle Lichtquelle erforderlich, sondern nur eine entsprechende Ausleuchtung des Werkstückes, die im Regelfall durch den Lichtbogen bzw. die Raumbeleuchtung ausreichend vorhanden ist. Eine zusätzliche Beleuchtung in dunklen Räumen kann ohne hohe Ansprüche (z.B. über Lichtleiter) hergestellt werden.

Bei der Erfindung wird ein Ausschnitt der Werkstückoberfläche (z.B. die Schweißnahtfuge in ihrer Querausdehnung) über zwei Optiken, die in einem bestimmten Abstand und in einem festen Winkel zueinander angeordnet sein können, auf zwei Halbleiterbildaufnehmern (oder auf unterschiedliche Bereiche eines Bildaufnehmers oder nacheinander auf einem einzigen Bildaufnehmer) abgebildet, wobei auf den entstehenden Bildern alle markanten Positionen der Oberfläche abhängig von deren Entfernung zu den beiden Optiken gegeneinander verschoben sind. Auf jedem der beiden Bilder werden die markanten Abschnitte und Punkte der Werkstückoberfläche, die sich durch unterschiedliche Strukturen und Beleuchtungsstärken sowie Defekte der Oberfläche ergeben, festgestellt. Aus den Positionen der Abbildungen jedes markanten Punktes der Oberfläche (Defekt, Strukturveränderung usw.) auf den beiden Bildaufnehmern wird dessen Position zum Koordinatensystem der Meßeinrichtung errechnet und aus der Position aller errechneten Oberflächenpunkte die Geometrie des gesamten Ausschnittes der im Meßbereich befindlichen Werkstückoberfläche ermittelt.

Die Bestimmung der Positionen der markanten Punkte der Oberfläche auf den beiden Bildaufnehmern kann bei diesen Verfahren auch durch ein Korrelationsverfahren erfolgen. Dabei werden die auf den Bildaufnehmern detektierten Abbildungen der Strukturen durch Kreuzkorrelation zur Deckung gebracht und dadurch deren Position im Koordinatensystem der Meßeinheit ermittelt. Dabei können durch entsprechende Verkleinerung des Korrelationsfensters beliebig kleine Strukturen aufgelöst werden.

Eine andere Variante zur Bestimmung korrespondierender Punkte wäre die Methode der Parameterintegration, wie z.B. die Funktion der Summe der Fehlerquadrate, die für den Fall "Gefunden" ein Minimum annehmen muß. ("Gefunden" heißt, daß durch die schrittweise Verschiebung der beiden Lichtstärkefunktionen gegeneinander ein ausgewähltes intervall derselben optimal zur Deckung gebracht wurde.) Aus dem Ausmaß der Verschiebung können unmittelbar mit den elementaren Gesetzen der Mathematik (Strahlensatz) die Lage und Entfernung bezüglich des Sensorkoordinatensystems (Koordinatensystem der Meßeinrichtung) ermittelt werden.

Die Korrelation der einzelnen Strukturen kann im Prinzip auch mechanisch durch Verstellen der Optiken erfolgen, die elektronische Lösung wird jedoch wegen des geringeren Aufwandes bevorzugt. Da die Oberflächenstrukturen zur Ermittlung der Gesamtgeometrie herangezogen werden sollen, wird außer der Korrelation auch die Methode der Differentiation verwendet.

Nachdem durch die oben geschilderten Methoden die Geometrie der Werkstückoberfläche im Meßbereich des Systems ermittelt worden ist, kann das Gerät beim Einsatz für die automatische Lichtbogenschweißung z.B. das Volumen der Nahtfuge berechnen und alle Daten zur Korrektur der Schweißpistolenposition und der Schweißparameter einem übergeordneten Rechner zur Verfügung stellen.

Der "übergeordnete Rechner" seinerseits kann dem Sensor eine Musterstruktur übergeben, die dieser zur Identifikation der Naht heranzieht, wobei diese Identifikation grob durch heuristische Algorithmen und für höhere Ansprüche durch Variationsrechnung erfolgen kann.

Bei anderen Anwendungen können dementsprechend die erforderlichen Daten errechnet und gespeichert werden und durch Auswertung einer Summe von Einzelmessungen an unterschiedlichen Positionen Informationen über die gesamte Oberfläche eines Werkstückes erarbeitet werden.

Im einzelnen kann beim erfindungsgemäßen Verfahren so vorgegangen werden, daß man die Werkstückoberfläche über zwei getrennte Optiken auf zwei getrennten Bildaufnehmern oder auf zwei getrennten Sektoren eines gemeinsamen Bildaufnehmers abbildet. Dabei wird jede Optik einem Bildaufnehmer oder einem bestimmten Abschnitt des gemeinsamen Bildaufnehmers zugeordnet.

Welche dieser beiden Ausführungsformen man bevorzugt, wird im wesentlichen nur durch die notwendige Auflösung bestimmt. Werden die Bilder der beiden Optiken auf zwei Sektoren desselben Bildaufnehmers projiziert, ist naturgemäß nur noch die halbe Auflösung zu erreichen. Für eine solche Strategie sprechen jedoch der deutlich geringere Kalibrieraufwand, da Halbleiterbildaufnehmer prozeßbedingt mit grober Genauigkeit gefertigt werden und die Kalibrierung der beiden Bilder relativ zueinander entfällt. Muß die volle Auflösung der technisch realisierbaren Bildaufnehmer ausgenützt werden, können zwei Bildaufnehmerchips verwendet werden, die dann allerdings genau zueinander justiert werden müssen.

Auf denselben Bildaufnehmer könnten auch unter Zuhilfenahme einer geeigneten Anordnung von Spiegeln und halbdurchlässigen Spiegeln die Aufnahmen durch die beiden Optiken zeitlich nacheinander erfolgen, wenn durch entsprechend geringe Vorschubgeschwindigkeit gewährleistet ist, daß trotz zeitlich nacheinander erfolgten Aufnahmen noch annähernd derselbe Ausschnitt des Werkstückes abgebildet wurde.

Bei letztgenannter Ausführungsvariante werden die Probleme der mechanischen Kalibrierung und der geringeren Auflösung auf Kosten der Dynamik umgangen.

Die Abbildungen markanter Stellen der Werkstückoberfläche auf den beiden verschobenen Bildern werden durch Plausibilitätsrechnungen und/oder Korrelation bestimmt und aus den Positionen dieser Abbildungen auf den beiden Bildaufnehmern die Koordinaten aller durch eine Messung ermittelten markanten Oberflächenpunkte berechnet. Aus diesen Ergebnissen kann die Geometrie der gesamten Oberfläche z.B. auch durch Vorgabe bestimmter oder durch den Vergleich mit verschiedenen Oberflächenmustern auf einfache Weise ermittelt werden.

Bei der Anwendung der Korrelation zur Bestimmung der einander zuzuordnenden Ausschnitte auf den beiden Bildaufnehmern wird diese vorzugsweise elektronisch (rechnerisch) durchgeführt, wobei vorgesehen werden kann, daß man Bilder unmittelbar benachbarter Ausschnitte des relevanten Bereiches der Werkstückoberfläche korreliert und das Korrelationsfenster zur Auflösung feiner Strukturen im Zuge der Auswertung eines Meßergebnisses schrittweise verkleinert.

Nach einer anderen Variante des erfindungsgemäßen Verfahrens kann man dazu so vorgehen, daß man die Position und/oder die Geometrie der Werkstückoberfläche durch Differentiation der Lichtstärkefunktion nach dem geometrischen Ort, Betragsbildung und Kreuzkorrelation ermittelt.

In einer anderen Ausführungsform des erfindungsgemäßen Verfahrens kann auch eine solche Anordnung der beiden Optiken für die Aufnahme der verschobenen Bilder gewählt werden, bei der die Projektion beider Bilder auf einem einzigen Bildaufnehmer erfolgt. Während der mechanischen kontinuierlichen oder schrittweisen Verstellung des optischen Systems werden dabei, nacheinander die verschiedenen Bildstellen am Bildaufnehmer zur Korrelation gebracht. Der Rechner kann korrelierende Bildstellen erkennen und aus der zum jeweiligen Zeitpunkt bekannten Position des optischen Systems Schritt für Schritt die Lage der markanten Oberflächenstruktur im Raumkoordinatensystem der Meßeinrichtung bestimmen.

Beim der praktischen Ausführung des erfindungsgemäßen Verfahrens für die Anwendung zum automatischen Lichtbogenschweißen bewährt es sich, wenn nur ein linienförmiger Ausschnitt der Werkstückoberfläche (quer zur Schweißnahtfuge) durch zwei Optiken auf zwei getrennte lineare Bildaufnehmer (oder auf zwei für die Auswertung getrennte Sektoren eines gemeinsamen Bildaufnehmers oder zeitlich versetzt auf denselben Bildaufnehmer) projiziert wird. Dann wird aus den Positionen der Abbildungen von markanten Oberflächenstellen auf den beiden verschobenen Bildzeilen die Position dieser Punkte der Werkstückoberfläche berechnet, um sodann aus allen berechneten Einzelpunkten das Profil und die Position der Nahtfuge zu bestimmen. Durch die Vorschubbewegung und invervallweise wiederholte Messungen kann dabei der Schweißbrenner (und das Meßsystem) durch Auswertung der einzelnen Meßergebnisse zum Anfang der Nahtfuge positioniert, während der Ausführung der Schweißung dem Fugenverlauf nachgeführt und die Schweißparameter entsprechend dem jeweils gemessenen Fugenprofil gesteuert werden. Durch kurzzeitige Veränderung der Position der Meßeinrichtung in größeren Intervallzeiten kann dabei auch das technologische Ergebnis (Dimension, Position bzw. Form der geschweißten Naht) überprüft und bei der weiteren Steuerung gegebenenfalls Korrekturfaktoren berücksichtigt werden.

Ein derartiger Meß- und Steuerungsaufbau kann auch für viele andere technologische Aufgaben mit Vorteil angewendet werden. Alternativ zu diesem Schritt-für-Schritt-Verfahren ist es mit der Erfindung freilich auch möglich, den relevanten Bereich der Werkstückoberfläche (oder größere Ausschnitte derselben) auf einmal abzubilden und auf rechnerische Weise die Position aller markanten Stellen der Werkstückoberfläche zu ermitteln.

Bei der Meßmethode mit linearen Bildaufnehmern können unter bestimmten Verhältnissen besser auswertbare Bilder dadurch erzielt werden, daß die Strahlen von einem schmalen Streifen der Oberfläche durch zylindrische Linsen auf die fast linienförmig angeordneten Sensoren gesammelt (konzentriert) werden.

Das Meßprinzip mit linearen Bildaufnehmern bietet bei der Anwendung nahe einem Schweißlichtbogen auch den entscheidenden Vorteil, daß die Optiken hinter einem schmalen Schlitz des Gehäuses angeordnet und so gegen Schweißspritzer geschützt werden können. Dieser Schlitz kann durch Ausblasen mit Schutzgas (oder intervallweise zwischen den Schweißvorgängen mit Druckluft) von Schmutz freigehalten werden.

Um trotz der unterschiedlichsten, durch das Raumlicht, das Zusatzlicht oder den Lichtbogen verursachten Beleuchtungstärken zu auswertbaren Meßergebnissen zu gelangen, wird man entsprechend den verschiedenen Bildaufnehmern unterschiedliche Methoden wählen. Am besten geeignet sind Sensoren, die das einfallende Licht aufintegrieren. Damit kann ein Bild durchschnittlicher Helligkeit auch bei extremen Schwankungen der Lichtstärke durch unterschiedlich lange Aufnahmezeiten erhalten werden. Die Steuerung der Aufnahmedauer kann dabei direkt durch die jeweils eingefallene Lichtmenge erfolgen. Bei anderen Sensoren kann die Summe mehrerer identer Einzelmessungen gebildet und zur Auswertung herangezogen werden.

Nachstehend wird das erfindungsgemäße Verfahren unter Bezugnahme auf die Zeichnungen für den Fall eines linearen Bildaufnehmers näher erläutert. Bei flächenhaften Bildaufnehmern bleibt die Verfahrensstrategie ident. Die einzelnen Berechnungen dehnen sich dann auf zwei Dimensionen aus. Es zeigt

Fig. 1 in schematischer Darstellung die prinzipielle Anordnung bei der Durchführung des erfindungsgemäßen Verfahrens,

Fig. 2 verschiedene bei der Durchführung des erfindungsgemäßen Verfahrens erhaltene Abbildungen,

Fig. 3 und 4 verschiedene Diagramme im Zuge der Durchführung einer Kreuzkorrelation unter Verwendung der Lichtstärkefunktion und

Fig. 5 eine Gesamtanordnung zur Durchführung des erfindungsgemäßen Verfahrens.

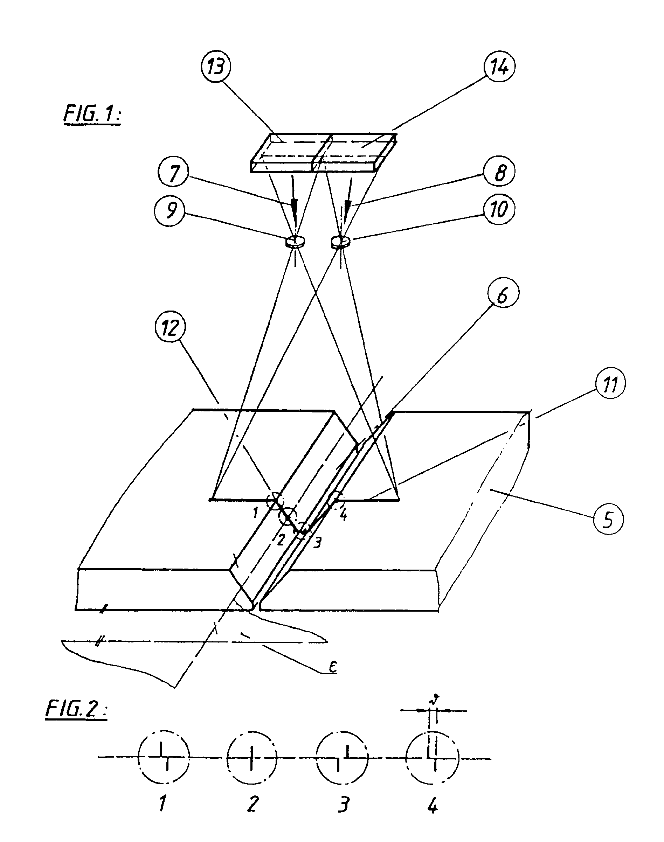

Aus Fig. 1 ist ersichtlich, daß ein Werkstück 5, in dem eine Nut 6 (Nahtfuge) vorgesehen ist, mit zueinander konvergierenden Blickrichtungen (Pfeile 7 bzw. 8) durch zwei Optiken 9 und 10 betrachtet wird. Dabei betrachten die Optiken 1 und 2 eine quer zur Nahtfuge 6 verlaufende Linie 11 der Oberfläche des Werkstückes 5, wobei nacheinander die Ausschnitte 1 bis 4 abgebildet werden. Beim in Fig. 1 gewählten Ausführungsbeispiel wird angenommen, daß in jedem Ausschnitt 1 bis 4 eine markante Struktur 12 der Werkstückoberfläche vorliegt.

Die beiden Optiken 9 und 10 zeigen auf den ihnen zugeordneten Bildaufnehmern 13 bzw. 14 Bilder der Ausschnitte 1 bis 4, wobei die markanten Strukturen 12 zueinander versetzt abgebildet werden. Der Abstand der beiden Bilder der Strukturen 12 ist ein Maß für den Abstand der Struktur von einer vorher gewählten neutralen Ebene ε. Es ist erkennbar, daß in Bild 2 der Abstand δ gleich Null ist, da die Struktur 12 im Ausschnitt 2 der Werkstückoberfläche in der neutralen Ebene ε liegt.

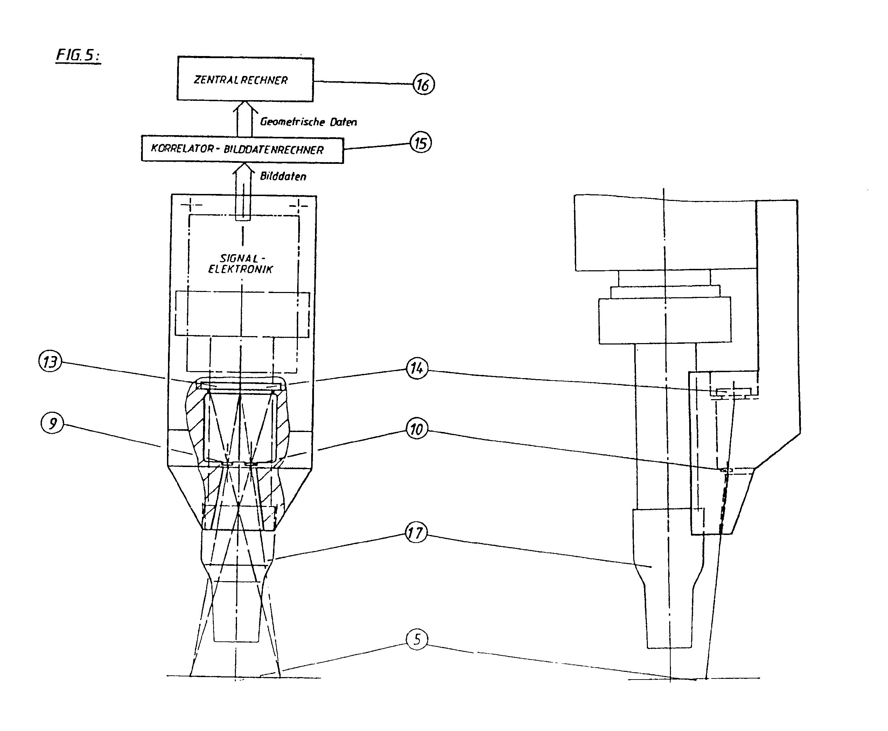

Die in Fig. 5 schematisch angedeuteten Bildaufnehmer 13 und 14 können Fotodiodenreihen sein, die Bilddaten einem die Korrelation ausführenden Bilddatenrechner 15 zuleiten. Der Bilddatenrechner 15 gibt die ermittelten geometrischen Daten über die Oberfläche des Werkstückes 5 an den Zentralrechner 16 weiter, der diese zur Korrektur der Bahn, nach welcher eine Schweißpistole 17 bewegt wird, und der Schweißparameter, bewertet.

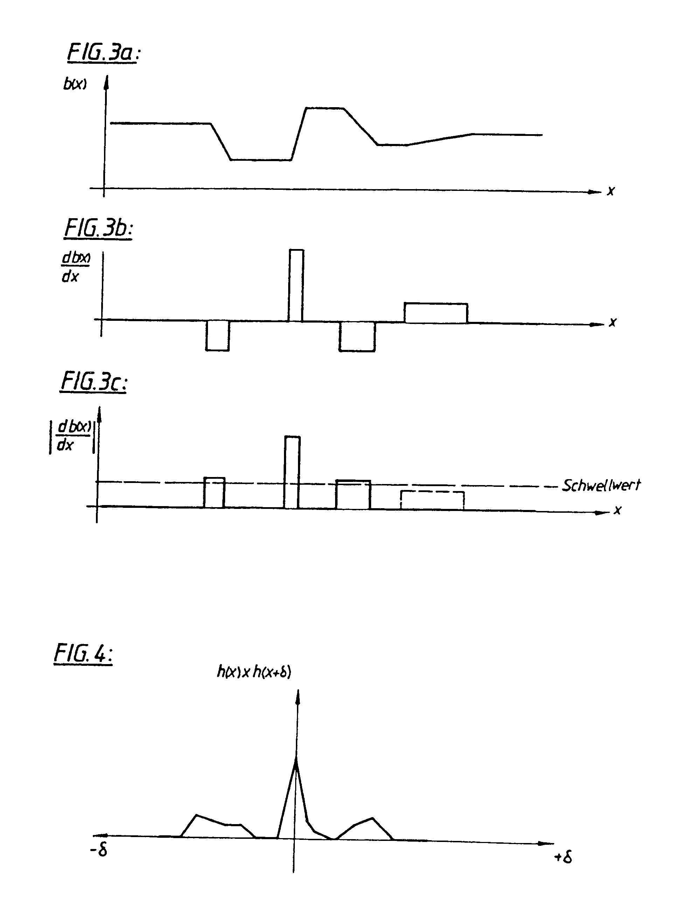

Die Auswertung der von den Bildaufnehmern abgegebenen Daten am Beispiel der Kreuzkorrelation unter Verwendung der Lichtstärkefunktion (b(x)) wird an Hand der Fig. 3 und 4 erläutert. Fig. 3a zeigt ein Diagramm, in dem die Lichtstärkefunktion b(x) gegen den geometrischen Ort x aufgetragen ist. Durch Differentiation $\frac{db(x)}{dx}$ auf Fig. 3b und Bildung des Absolutwertes erhält man die Funktion h(x) auf Fig. 3c. Es werden also durch Differentiation, Betragsbildung und Anwendung eines Schwellwertes markante Strukturen der Werkstückoberfläche herausgearbeitet, wobei andere Strukturen unterdrückt werden. Die wird für die von den Optiken 9 und 10 gespeisten. Dildaufnehmer 13 und 14 durchgeführt, wobei um den Abstand der beiden Bilder δ zueinander verschobene Funktionen h(x) und h(x+δ) erhalten werden. Durch Korrelieren dieser beiden Funktionen h(x) und h(x+δ) erhält man die Kreuzkorrelationsfunktion H(x), wie sie in Fig. 4 dargestellt ist. Diese Kreuzkorrelationsfunktion H(x) wird nun nach dem größten Extremwert abgesucht, der dann einer markanten Struktur, beispielsweise einer Kante der Werkstückoberfläche, entspricht.

## Ansprüche

1. Verfahren zum Erfassen der Position und Geometrie von Werkstückoberflächen, insbesondere von Nahtfugen beim automatischen Lichtbogenschweißen, dadurch gekennzeichnet, daß man die Werkstückoberfläche oder bevorzugt einen Ausschnitt derselben aus zwei verschiedenen Betrachtungsstellen auf Bildaufnehmern abbildet, so daß auf den Bildaufnehmern gegeneinander verschobene Bilder der Werkstückoberfläche abgebildet werden, daß man in jedem der beiden Bilder die markanten Bildstellen feststellt, die sich durch die Oberflächenstrukturen oder durch Defekte der betrachteten Werkstückoberfläche ergeben, daß man jedem Abbild eines markanten Punktes der Werkstückoberfläche auf dem einen Bildaufnehmer das entsprechende Abbild auf dem zweiten Bildaufnehmer zuordnet und daß man sodann aus der Position dieser einzelnen markanten Bildstellen auf den beiden Bildaufnehmern die Lage dieser Punkte der Werkstückoberfläche im Raumkoordinatensystem des Bildaufnehmers errechnet, um schließlich aus der Position dieser einzelnen markanten Punkte der Werkstückoberfäche die gesamte Geometrie der betrachteten Werkstückoberfläche und deren Position zum Betrachtungssystem zu bestimmen.

2. Verfahren nach Anspruch 1, dadurch gekennzeichnet, daß man die Werkstückoberfläche über zwei getrennte Optiken auf zwei getrennten Bildaufnehmern oder auf zwei getrennten Sektoren eines gemeinsamen Bildaufnehmers abbildet.

3. Verfahren nach Anspruch 1, dadurch gekennzeichnet, daß man die Werkstückoberfläche intermittierend über zwei getrennte Optiken auf demselben Bildaufnehmer abbildet und für die Auswertung zwei zeitlich hintereinander aufgenommene Bilder verwendet.

4. Verfahren nach einem der Ansprüche 1 bis 3, dadurch gekennzeichnet, daß nur ein Ausschnitt der Werkstückoberfläche auf linearen Bildaufnehmern abgebildet wird, wobei daß Meßsystem bei der Vermessung von Werkstücken mit Rillen oder fugenförmiger Oberfläche vorzugsweise so positioniert werden kann, daß die Meßebene quer zu diesen Fugen angeordnet ist.

5. Verfahren nach einem der Ansprüche 1 bis 4, dadurch gekennzeichnet, daß die auf den Bildaufnehmern generierten Lichtstärkewerte durch Differentiation und anschließendem Schwellwertvergleich nach signifikanten Bildstellen vorverarbeitet werden.

6. Verfahren nach einem der Ansprüche 1 bis 5, dadurch gekennzeichnet, daß korrespondierende Punkte auf den beiden Bildern von einem elektronischen Rechner durch heuristische Prinzipien oder die mathematischen Methoden der Korrelation oder der Parameterintegration gefunden werden, oder daß korrespondierende Punkte auf elektromechanischem Weg durch Verstellen zweier Spiegel, die das Bild auf je einen Bildaufnehmer richten, gefunden werden und aus der Stellung der Spiegel die Lage des gefundenen Punktes, bezogen auf das Sensorkoordinatensystem, bestimmt wird.

7. Verfahren nach einem der Ansprüche 1 bis 6, dadurch gekennzeichnet, daß aus den errechneten Positionen der markanten Oberflächenpunkte in einem elektronischen Rechner die Struktur der gesamten im Meßbereich liegenden Oberfläche ermittelt wird, wobei gegebenenfalls Musterstrukturen vorgegeben werden und Identifikation der Strukturen durch Befilterung, Differentiation zur Ermittlung von Kantenpositionen und Ebenen sowie Variationsrechnung erfolgt.

8. Verfahren nach einem der Ansprüche 1 bis 7, dadurch gekennzeichnet, daß aus den Ergebnissen mehrerer zeitlich und räumlich aufeinanderfolgender Meßzyklen die Geometrie von größeren Ausschnitten der Werkstückoberfläche oder des gesamten Werkstückes ermittelt wird.

9. Verfahren nach einem der Ansprüche 1 bis 8, dadurch gekennzeichnet, daß die Werkstückoberfläche bei Anwendung des Verfahrens beim Lichtbogenschweißen durch den Lichtbogen ausgeleuchtet wird, und daß man in Betriebszuständen, in denen der Lichtbogen nicht brennt, Fremdlicht zur Ausleuchtung verwendet.

10. Verfahren nach einem der Ansprüche 1 bis 9, dadurch gekennzeichnet, daß die Steuerung der Aufnahmezeit so erfolgt, daß der Bildaufnehmer so lange belichtet wird, bis die gewünschte durchschnittliche Lichtmenge eingefallen ist bzw. daß man unmittelbar aufeinanderfolgende Aufnahmen gleicher Zeitdauer zu auswertbaren Lichtstärkefunktionen aufsummiert.

## Claims

1. A method for detecting the position and geometrie workpiece surfaces, especially of seam joints in automatic arc welding, characterised in that the workpiece surface or preferably a cutaway portion thereof from two different observation positions is reproduced on image receivers, so that images of the workpiece surface, which are displaced with respect to each other on the image receivers, are reproduced, that in each of the two images the characteristic image positions are established, which are produced through the surface structures or through defects in the observed workpiece surface, that each image of a characteristic point of the workpiece surface on one image receiver is associated with the corresponding image on the second image receiver and that then from the position of these individual characteristic image positions on the two image receivers, the position of these points on the workpiece surface is calculated in the space coordinate system of the image receiver, in order to finally determine from the position of these individual characteristic points of the workpiece surface the overall geometry of the observed workpiece surface and ist position in relation to the observation system.

2. A method according to Claim 1, characterised in that the workpiece surface is reproduced via two separate optical systems on two separate image receivers or on two separate sectors of a common image receiver.

3. A method according to Claim 1, characterised in that the workpiece surface is reproduced intermittently via two separate optical systems on the same image receiver and is used for the evaluation of two images which are received in series chronologically.

4. A method according to one of Claims 1 to 3, characterised in that only one cutaway portion of the workpiece surface is reproduced on linear image receivers, wherein the measurement system in the measuring of workpieces with grooves or with a surface in the form of a joint can preferably be positioned such that the measurement plane is arranged transversely to these joints.

5. A method according to one of Claims 1 to 4, characterised in that the light intensity values generated on the image receivers are pre-processed through differentiation and subsequent threshold value comparison according to significant image positions.

6. A method according to one of Claims 1 to 5, characterised in that corresponding points on the two images are found by an electronic computer through heuristic principles or the mathematical methods of correlation or parameter integration, or that corresponding points are found electromechanically through the adjustment of two mirrors, which direct the image onto one image receiver in each case, and from the position of the mirror the position of the found point, in rekation to the sensor coordinate system, is determined.

7. A method according to one of Claims 1 to 6, characterised in that from the calculated positions of the characteristic surface points, the structure of the entire surface lying in the measurement range is determined in an electronic computer, wherein if applicable sample structures are preset and the identification of the structures takes place through filtering, differentiation to determine edge positions and planes and also variation calculation.

8. A method according to one of Claims 1 to 7, characterised in that from the results of a plurality of chronologically and spatially successive measurement cycles, the geometry of larger cutaway portions of the workpiece surface or of the entire workpiece is determined.

9. A method according to one of Claims 1 to 8, characterised in that when the method is used in arc welding, the workpiece surface is illuminated by the arc, and that in operating conditions in which the arc is not burning, outside light is used for illumination.

1O. A method according to one of Claims 1 to 9, characterised in that the control of the exposure time takes place such that the image receiver is exposed until the desired average amount of light has come in or respectively in that immediately successive exposures of identical duration are summed to light intensity functions which are able to be evaluated.


## Revendications

1. Méthode de détection de la position et de la géométrie de surfaces de pièces de travail, en particulier de joints en cordon lors de la soudure automatique à l'arc, caractérisée par le fait que l'on représente sur des recepteurs d'images la surface d'une pièce de travail ou de préférence une tranche de celle-ci à partir de deux postes d'observation, de sorte que sur les récepteurs d'images soient représentées des images, décalées l'une par rapport à l'autre, de la surface de la pièce de travail, par le fait que l'on constate sur chacune des deux images les emplacements marquants qui résultent des structures de la surface ou des défauts de la surface observée, que l'on affecte à chaque représentation d'un point marquant de la surface de la pièce sur le premier récepteur la représentation correspondante sur le second et que l'on calcule ainsi, à partir de la position de ces différents emplacements marquants sur les deux récepteurs d'images la situation de ces points de la surface de la pièce dans le système de coordonnées spatiales du récepteur pour déterminer finalement, à partir de la position de ces différents points marquants de la surface de la pièce, l'ensemble de la géométrie de la surface observée et sa position par rapport au système d'observation.

2. Méthode selon revendication 1, caractérisée par le fait que l'on représente la surface de la pièce de travail par l'intermédiaire de deux optiques séparées, sur deux récepteurs d'images séparés ou sur deux secteurs séparés d'un récepteur d'images commun.

3. Méthode selon revendication 1, caractérisée par le faitt que l'on représente la surface de la pièce de travail de façon intermittente par l'intermédiaire de deux optiques séparées sur le même récepteur d'images et que, pour l'exploitation, l'on utilise deux vues prises chronologiquement l'une après l'autre.

4. Méthode selon l'une des revendications 1 à 3, caractérisée par le fait que seule une tranche de la surface de la pièce de travail est représentée sur des récepteurs linéaires d'images, cependant que le système de mesure, lors du mesurage de pièces de travail présentant des rainures ou une surface en forme de joint, puisse être de préférence positionné de façon à ce que le plan de mesure soit parpendiculaire à ces joints.

5. Méthode selon l'une des revendications 1 à 4, caractérisée par le fait que les valeurs d'intensité lumineuse générées sur les récepteurs d'images sont traitées frontalement par différenciation et comparaison ultérieure de la valeur de seuil d'après des emplacements significatifs sur les images.

6. Méthode selon l'une des revendications 1 à 5, caractérisée par le fait que des points correspondants sont trouvés sur les deux images par un ordinateur électronique appliquant des principes heuristiques ou les méthodes mathématiques de la corrélation ou de l'intégration des paramètres, ou par le fait que des points correspondants sont trouvés salon un procédé électromécanique en réglant deux miroirs qui dirigent l'image chacun sur un récepteur et qu'à partir de la position des miroirs, la situuation du point détecté est déterminée en fonction du système dess coordonnées du capteur.

7. Méthode selon l'une des revendications 1 à 6, caractérisée par le fait qu'à partir du calcul des positions des points marquants de la surface dans un ordinateur électronique, la structure de l'ensemble de la surface se trouvant dans la zone de mesure est détectée, cependant que, le cas échéant, des structures-type sont prédéfinies et qu'une identification des structures par filtrage, qu'une différenciation pour la détection de positions d'arêtes et de plans ainsi qu'un calcul de variation sont effectués.

8. Méthode selon l'une des revendications 1 à 7, caractérisée par le fait qu'à partir des résultats de plusieurs cycles de mesure se suivant chronologiquement et spatialement, la géométrie de tranches plus importantes de la surface de la pièce de travail ou de l'ensemble de la pièce de travail est détectée.

9. Méthode selon l'une des revendications 1 à 8, caractérisée par le fait que la surface de la pièce de travail est éclairée par l'arc lors de l'application de la méthode pendant la soudure à l'arc et que, dans des conditions de fonctionnement pour lesquelles l'arc n'est pas allumé, l'on utilise une lumière secondaire pour l'éclairage.

10. Méthode selon l'une des revendications 1 à 9, caractérisée par le fait que la commande de la durée de prise de vue s'effectue de telle façon que le récepteur d'images est exposé jusqu'à ce que la quantité moyenne de lumière souhaitée fasse incidence ou que l'on totalise directement des prises de vue successives de même durée pour obtenir des fonctions d'intensité lumineuse exploitables.

FIG. 1:

13    14

7    8

9    10

6

12    11

5

1

2    3    4

ε

FIG. 2:

1    2    3    4

## FIG.3a:

b(x)

## FIG.3b:

$\dfrac{db(x)}{dx}$

## FIG.3c:

$\left|\dfrac{db(x)}{dx}\right|$

Schwellwert

## FIG.4:

h(x) x h(x+δ)

-δ                    +δ

FIG.5:

ZENTRAL RECHNER

Geometrische Daten

KORRELATOR - BILDDATENRECHNER

Bilddaten

SIGNAL - ELEKTRONIK

16
15
14
10
17
5
13
9